# EUROPÄISCHE PATENTSCHRIFT

(11) **EP 1 419 020 B1**
(45) Veröffentlichungstag und Bekanntmachung des Hinweises auf die Patenterteilung: **25.10.2006**
(21) Anmeldenummer: 02758151.1
(22) Anmeldetag: 19.08.2002
(51) Int. Cl.: B29C 45/26, F16K 1/22

(54) **DROSSELKLAPPENSTUTZEN**
BUTTERFLY VALVE CONNECTION PIECE
TUBULURE DE PAPILLON DES GAZ

(30) Priorität: 23.08.2001 DE 10140409
(43) Veröffentlichungstag der Anmeldung: 19.05.2004
(73) Patentinhaber: SIEMENS AKTIENGESELLSCHAFT, 80333 München (DE)
(72) Erfinder: VON WILLICH, Joachim, 65618 Selters (DE)
(86) Internationale Anmeldenummer: PCT/DE2002/003042
(87) Internationale Veröffentlichungsnummer: WO 2003/018229

(56) Entgegenhaltungen:
- WO-A-97/04259
- DE-A- 4 429 956
- US-A- 5 315 975
- US-A- 5 374 031

## Beschreibung

Die Erfindung bezieht sich auf einen Drosselklappenstutzen mit einem Gehäuse oder Einsatzteil eines Gehäuses, wobei das Gehäuse oder Einsatzteil des Gehäuses eine Durchströmöffnung aufweist, in die eine Drosselklappe um eine sich quer zur Längserstreckung der Durchströmöffnung erstreckende Schwenkachse schwenkbar angeordnet ist und wobei die Drosselklappe in ihrer Schließstellung in einem Drosselanfangsbereich an der Innenwand der Durchströmöffnung in Anlage ist, daß der Drosselanfangsbereich, der sich von dem Anlagebereich der Drosselklappe an der Innenwand der Durchströmöffnung in Drosselklappenöffnungsrichtung erstreckt, etwa kalottenartig oder etwa mit einem entlang einer verschwenkten Längsachse der Durchströmöffnung verschobenen Kreisquerschnitt und die sich an das Ende des Drosselanfangsbereichs zuström- und abströmseitig anschließenden Zuström- und Abströmbereiche zylindrisch oder sich konisch erweiternd ausgebildet sind, wobei die Innenwand der Durchströmöffnung zumindest im Drosselanfangsbereich eine mechanisch unbearbeitete Spritzgußoberfläche mit einem kerntrennungsgrat besitzt.

Bei derartigen Gehäusen oder Einsatzteilen für Gehäuse ist es bekannt, zumindest den Drosselanfangsbereich in Drosselklappenöffnungsrichtung wegen dessen komplizierter kalottenartiger oder verschwenkter Ausgestaltung durch spanende Bearbeitung herzustellen. Die kalottenartige oder verschwenkte Ausgestaltung des Drosselanfangsbereichs dient dazu, den von der Drosselklappe freigegebenen Öffnungsquerschnitt beim Öffnen aus der Schließstellung heraus während des Drosselanfangsbereichs sich nur langsam vergrößern zu lassen, um eine Feinfühligkeit der Luftdurchströmung in diesem Bereich zu ermöglichen.

Die Herstellungsweise dieser bekannten Gehäuse und Einsatzteile ist sehr aufwendig und ermöglicht es nicht, das Gehäuse oder das Einsatzteil aus Kunststoff herzustellen.

Aus der WO-A-97/04259 ist ein Drosselklappenstutzen bekannt, bei dem ein aus vier Kernteilen bestehender Kern in einer Spritzgußform angeordnet und durch Spritzgießen umspritzt wird. Jeweils zwei mit ihren einander zugewandten Stirnflächen aneinanderliegende Kernteile bilden an ihren aneinanderliegenden Stirnflächen eine Kerntrennebene, wobei die Kerntrennebenen der beiden Kernteilepaare in unterschiedlichen Ebenen verlaufen.

Die beiden Kernteilpaare sind derart zueinander achsversetzt, daß an der Wandung der Durchströmöffnung etwa radial zurückspringende Stufen gebildet werden, an denen die Drosselklappe in ihrer Schließstellung in Anlage ist. An dem Übergang von der Wandung der Durchströmöffnung zur radial zurückspringenden Stufe entsteht ein Kerntrennungsgrat. Sowohl durch den Kerntrennungsgrat als auch durch die radial zurückspringenden Stufen werden Luftwirbel in der Nähe der Drosselklappe erzeugt, so daß die Feinfühligkeit der Luftdurchströmung zu Beginn des Öffnens der Drosselklappe störend beeinflußt wird.

Aufgabe der Erfindung ist es einen Drosselklappenstutzen der eingangs genannten Art zu schaffen, wobei nur wenige, einfache Herstellungsschritte erforderlich sind und bei dem Drosselklappenstutzen die Feinfühligkeit der Luftdurchströmung zu Beginn des Öffnens der Drosselklappe nicht störend beeinflußt wird.

Diese Aufgabe wird erfindungsgemäß dadurch gelöst, daß der Kerntrennungsgrat sich von der rechtwinklig zur Schwenkachse entferntesten Stelle eines Übergangs zwischen dem Ende des Drosselanfangsbereichs und dem Zuströmbereich zu der rechtwinklig zur Schwenkachse entferntesten Stelle eines Übergangs zwischen dem Ende des Drosselanfangsbereichs und dem Abströmbereich erstreckt und entsprechend der Längserstreckung der Schwenkachse der Drosselklappe ausgerichtet ist, und daß die Drosselklappe in ihrer Schließstellung mit ihrem radial umlaufenden Rand an einem Anlagebereich in dem Drosselanfangsbereich in Anlage ist, wobei der Kerntrennungsgrat sich außerhalb des Anlagebereichs der Drosselklappe befindet.

Diese Ausbildung ermöglicht eine Herstellung des Gehäuses oder des Einsatzteils mit wenigen, einfachen Herstellungsschritten ohne das Erfordernis einer spanenden anderweitigen Nachbearbeitung der Durchströmöffnung selbst in deren kompliziert geformten Drosselanfangsbereich. Die Form der Durchströmöffnung und die Oberfläche von deren Innenwand ist durch den Spritzvorgang bereits endgültig erzeugt.

Die spezielle Lage der Kerntrennebene vermeidet es, daß Hinterschnitte entstehen, die ein Entformen des Kerns verhindern würden.

Weiterhin entsteht der Kerntrennungsgrat an einer Stelle außerhalb des Anlagebereichs der Drosselklappe an der Innenwand der Durchströmöffnung und kann somit das einwandfreie Schließen der Drosselklappe nicht beeinträchtigen.

Dabei ist ein feinfühliges, ungestörtes Öffnen der Drosselklappe zu Beginn der Öffnungsbewegung möglich, wenn die Drosselklappe in ihrer Schließstellung in einem Abstand vom Übergang zwischen dem Ende des Drosselanfangsbereichs und dem Zuströmbereich und in einem Abstand vom Übergang zwischen dem Ende des Drosselanfangsbereichs und dem Abströmbereich mit ihrem radial umlaufenden Rand im Drosselanfangsbereich an der Innenwand der Durchströmöffnung in Anlage ist, so daß die Feinfühligkeit der Luftdurchströmung zu Beginn des Öffnens der Drosselklappe auch nicht durch am Kerntrennungsgrat erzeugte Luftwirbel in der Nähe der Drosselklappe störend beeinflußt wird.

Der Kern kann mit einem Leichtmetall, insbesondere mit Aluminium umspritzt sein, ohne daß eine herkömmliche spanende Nachbearbeitung anschließend erforderlich ist.

Ist der Kern mit einem Kunststoff umspritzt, so kann nunmehr auch ein Gehäuse oder Einsatzteil mit kompliziert geformtem Drosselanfangsbereich aus Kunststoff hergestellt werden. Dabei ist vorzugsweise der Kern mit einem Thermoplast oder einem Duroplast umspritzt.

Ausführungsbeispiele der Erfindung sind in der Zeichnung dargestellt und werden im folgenden näher beschrieben. Es zeigen
- Figur 1: ein erstes Ausführungsbeispiel eines Drosselklappenstutzens im Längsschnitt
- Figur 2: eine Spritzgußform im Längsschnitt zur Herstellung des Gehäuses des Drosselklappenstutzens nach Figur 1
- Figur 3: die Spritzgußform nach Figur 2 im Längsschnitt nach einem Spritzgießvorgang
- Figur 4: ein zweites Ausführungsbeispiel eines Drosselklappenstutzens im Längsschnitt
- Figur 5: eine Prinzipskizze der Konturbildung des Drosselanfangsbereichs des Drosselklappenstutzens nach Figur 1.

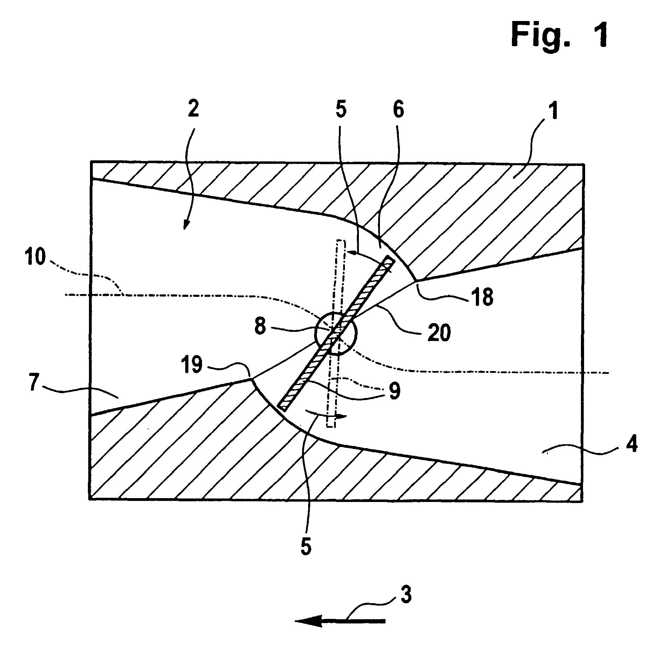

Die dargestellten Drosselklappenstutzen besitzen ein durch Spritzgießen aus Aluminium oder Kunststoff hergestelltes Gehäuse 1 mit einer Durchströmöffnung 2, die eine mechanisch unbearbeitete Spritzgußoberfläche der Innenwand besitzt. In Figur 1 besteht die Durchströmöffnung 2 aus einem sich in Strömungsrichtung 3 konisch verjüngenden Zuströmbereich 4, an dem sich in Drosselklappenöffnungsrichtung 5 ein Drosselanfangsbereich 6 anschließt, der wiederum von einem konisch sich erweiternden Abströmbereich 7 fortgesetzt wird.

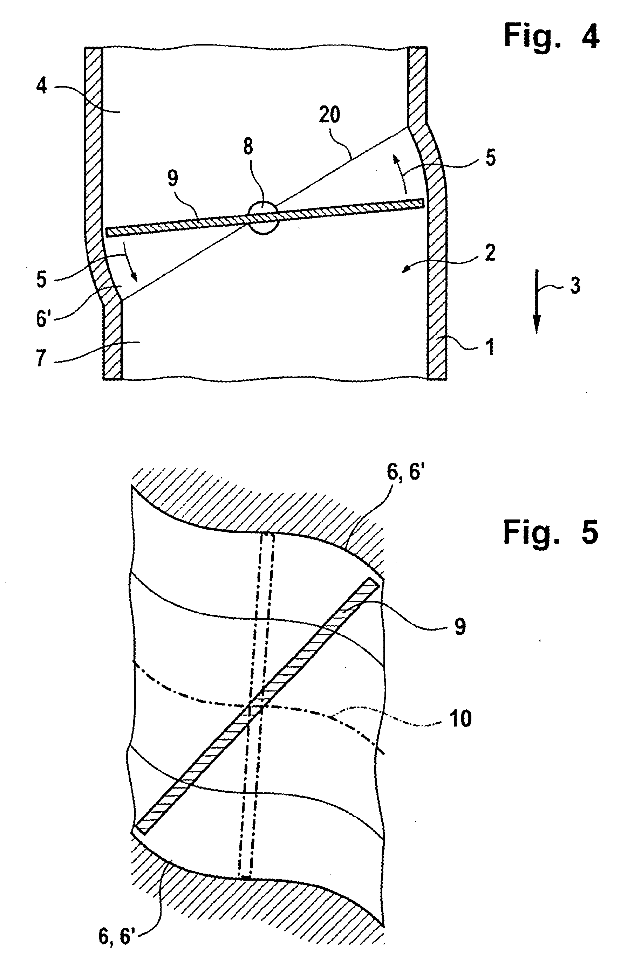

In Figur 4 besteht der Durchströmbereich 2 aus zylindrischen Zuström- und Abströmbereichen 4 und 7, zwischen denen der Drosselanfangsbereich 6' angeordnet ist.

Um eine sich quer zur Längserstreckung der Durchströmöffnung 2 in deren Drosselanfangsbereich 6 erstreckende Schwenkachse 8 schwenkbar ist eine Drosselklappe 9 angeordnet, die in ihrer dargestellten Schließstellung mit ihrem radial umlaufenden Rand an der Innenkontur der Durchströmöffnung 2 in deren Drosselanfangsbereich 6 bzw. 6' in Anlage ist.

Der Drosselanfangsbereich 6 in Figur 1 besitzt eine Kontur, die durch einen Halbkreisquerschnitt gebildet ist, der entlang einer verschwenkten Längsachse 10 verschoben ist.

Die Figur 5 zeigt eine Prinzipskizze dieser Konturbildung in der Seitenansicht.

Bei dem Ausführungsbeispiel der Figur 4 ist der Drosselanfangsbereich 6' mit einer Kontur einer Kugelkalotte ausgebildet.

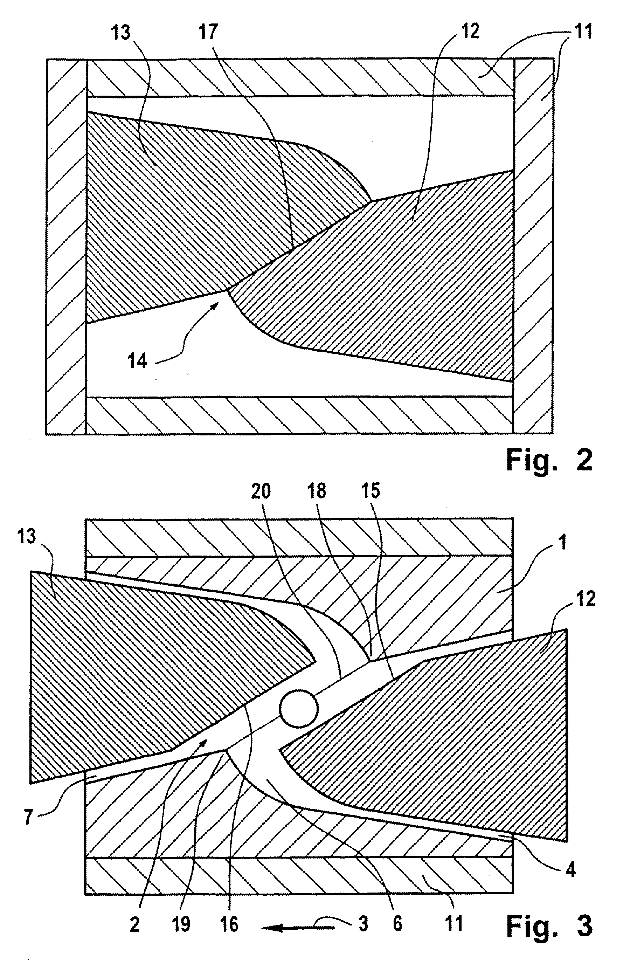

In Figur 2 sind in einer äußeren Spritzgußform 11 ein erster Kernteil 12 und ein zweiter Kernteil 13 eines Kerns 14 angeordnet, die mit ihren einander zugewandten Stirnflächen 15 und 16 aneinander in Anlage sind, wobei die aneinander anliegenden Stirnflächen 15 und 16 bei in der Spritzgußform 11 eingelegtem Kern 14 eine Kerntrennebene 17 bilden.

Die Kerntrennebene 17 erstreckt sich von der rechtwinklig zur Schwenkachse 8 entferntesten Stelle 18 des Übergangs zwischen dem Ende des Drosselanfangsbereichs 6 und dem Zuströmbereich 4 zu der rechtwinklig zur Schwenkachse 8 entferntesten Stelle 19 des Übergangs zwischen dem Ende des Drosselanfangsbereichs 6 und dem Abströmbereich 7. Die Kerntrennebene 18 ist entsprechend der Längserstreckung der Schwenkachse 8 der Drosselklappe 9 ausgerichtet.

In Figur 3 sind die Kernteile 12 und 13 nach einem Spritzgießvorgang bereits um einen Abstand axial voneinander weggezogen, so daß an dem gespritzten Gehäuse 1 ein Kerntrennungsgrat 20 sichtbar ist, der entlang der Kerntrennebene 17 entstanden ist.

Wie in Figur 1 zu erkennen ist, befindet sich dieser Kerntrennungsgrat 20 in einem Abstand zur Drosselklappe 9 in deren Schließstellung, so daß das einwandfreie Schließen der Drosselklappe 9 nicht durch den Kerntrennungsgrat 20 behindert wird.

## Patentansprüche

1. Drosselklappenstutzen mit einem Gehäuse oder Einsatzteil eines Gehäuses, wobei das Gehäuse oder Einsatzteil des Gehäuses eine Durchströmöffnung aufweist, in die eine Drosselklappe um eine sich quer zur Längserstreckung der Durchströmöffnung erstreckende Schwenkachse schwenkbar angeordnet ist und wobei die Drosselklappe in ihrer Schließstellung in einem Drosselanfangsbereich an der Innenwand der Durchströmöffnung in Anlage ist, daß der Drosselanfangsbereich, der sich von dem Anlagebereich der Drosselklappe an der Innenwand der Durchströmöffnung in Drosselklappenöffnungsrichtung erstreckt, etwa kalottenartig oder etwa mit einem entlang einer verschwenkten Längsachse der Durchströmöffnung verschobenen Kreisquerschnitt und die sich an das Ende des Drosselanfangsbereichs zuström- und abströmseitig anschließenden Zuström- und Abströmbereiche zylindrisch oder sich konisch erweiternd ausgebildet sind, wobei die Innenwand der Durchströmöffnung zumindest im Drosselanfangsbereich eine mechanisch unbearbeitete Spritzgußoberfläche mit einem Kerntrennungsgrat besitzt, **dadurch gekennzeichnet, daß** der Kerntrennungsgrad sich von der rechtwinklig zur Schwenkachse (8) entferntesten Stelle (18) eines Übergangs zwischen dem Ende des Drosselanfangsbereichs (6, 6') und dem Zuströmbereich (4) zu der rechtwinklig zur Schwenkachse (8) entferntesten Stelle (19) eines Übergangs zwischen dem Ende des Drosselanfangsbereichs (6, 6') und dem Abströmbereich (7) erstreckt und entsprechend der Längserstreckung der Schwenkachse (8) der Drosselklappe (9) ausgerichtet ist, und daß die Drosselklappe (9) in ihrer Schließstellung mit ihrem radial umlaufenden Rand an einem Anlagebereich in dem Drosselanfangsbereich (6, 6') in Anlage ist, wobei der Kerntrennungsgrat (20), sich außerhalb des Anlagebereichs der Drosselklappe (9) befindet.

2. Drosselklappenstutzen nach Anspruch 1, **dadurch gekennzeichnet, daß** die Drosselklappe (9) in ihrer Schließstellung in einem Abstand vom Übergang zwischen dem Ende des Drosselanfangsbereichs (6, 6') und dem Zuströmbereich (4) und in einem Abstand vom Übergang zwischen dem Ende des Drosselanfangsbereichs (6, 6') und dem Abströmbereich (7) mit ihrem radial umlaufenden Rand im Drosselanfangsbereich (6, 6') an der Innenwand der Durchströmöffnung (2) in Anlage ist.

3. Drosselklappenstutzen nach Anspruch 1, **dadurch gekennzeichnet , daß** der Kern (14) mit einem Leichtmetall, insbesondere mit Aluminium umspritzt ist.

4. Drosselklappenstutzen nach Anspruch 1, **dadurch gekennzeichnet, daß** der Kern (14) mit einem Kunststoff umspritzt ist.

5. Drosselklappenstutzen nach Anspruch 4, **dadurch gekennzeichnet, daß** der Kern (14) mit einem Thermoplast oder einem Duroplast umspritzt ist.

## Claims

1. Butterfly valve connection piece having a housing or insertion part of a housing, the housing or insertion part of the housing having a through-flow opening in which a butterfly valve is arranged so as to be pivotable about a pivot axis which extends transversely with respect to the longitudinal extent of the through-flow opening, and wherein in its closed position the butterfly valve abuts against the inner wall of the through-flow opening in a throttle starting region, in that the throttle starting region which extends from the abutment region of the butterfly valve on the inner wall of the through-flow opening in the opening direction of the butterfly valve is formed approximately in the form of a spherical cap or approximately with a circular cross section which is shifted along a pivoted longitudinal axis of the through-flow opening, and the inflow and outflow regions adjoining the end of the throttle starting region at the inflow and outflow sides being formed in a cylindrical or conically widening fashion, wherein the inner wall of the through-flow opening has, at least in the throttle starting region, a mechanically unmachined cast surface with a core separating bur, **characterized in that** the core separating bur extends from that point (18) on a junction between the end of the throttle starting region (6, 6') and the inflow region (4) which is furthest away at right angles to the pivot axis (8) to that point (19) on a junction between the end of the throttle starting region (6, 6') and the outflow region (7) which is furthest away at right angles to the pivot axis (8), and is oriented in accordance with the longitudinal extent of the pivot axis (8) of the butterfly valve (9), and **in that**, in its closed position, the butterfly valve (9) abuts with its radially circumferential edge against an abutment region in the throttle starting region (6, 6'), the core separating bur (20) being located outside the abutment region of the butterfly valve (9).

2. Butterfly valve connection piece according to Claim 1, **characterized in that**, in its closed position, the butterfly valve (9) abuts with its radially circumferential edge in the throttle starting region (6, 6') against the inner wall of the through-flow opening (2) at a distance from the junction between the end of the throttle starting region (6, 6') and the inflow region (4) and at a distance from the junction between the end of the throttle starting region (6, 6') and the outflow region (7).

3. Butterfly valve connection piece according to Claim 1, **characterized in that** the core (14) is encapsulated by injection moulding with a lightweight metal, in particular with aluminium.

4. Butterfly valve connection piece according to Claim 1, **characterized in that** the core (14) is encapsulated by injection moulding with a plastic.

5. Butterfly valve connection piece according to Claim 4, **characterized in that** the core (14) is encapsulated by injection moulding with a thermoplast or a duroplast.

## Revendications

1. Tubulure à papillon de régulation des gaz comportant un corps ou une pièce d'insertion pour un corps de tubulure, où le corps de tubulure ou la pièce d'insertion pour le corps de tubulure a une ouverture d'écoulement des gaz, dans laquelle un papillon de régulation des gaz est monté pivotant autour d'un axe s'étendant perpendiculairement au sens de la longueur de l'ouverture d'écoulement des gaz et où le papillon de régulation des gaz, dans sa position fermée, est appliqué, dans une zone de début de l'étranglement, contre la paroi intérieure de l'ouverture d'écoulement des gaz, où la zone de début de l'étranglement, qui s'étend, dans la direction d'ouverture du papillon de régulation des gaz, à partir de la zone où le papillon de régulation des gaz est appliqué contre la paroi intérieure de l'ouverture d'écoulement des gaz, est configurée à peu près à la manière d'une calotte ou à peu près avec une section circulaire décalée le long d'un axe longitudinal basculé de l'ouverture d'écoulement des gaz et les zones d'arrivée et de sortie du flux de gaz adjacentes à l'extrémité de la zone de début de l'étranglement du côté arrivée et du côté sortie du courant de gaz sont cylindriques ou s'élargissent d'une façon conique, où la paroi intérieure de l'ouverture d'écoulement des gaz a, au moins dans la zone de début de l'étranglement, une surface moulée par injection sans usinage mécanique ultérieur comportant une bavure de séparation du noyau, **caractérisée par le fait que** la bavure de séparation du noyau s'étend, en partant de la partie (18) la plus éloignée, perpendiculairement à l'axe de basculement (8), d'une transition entre la fin de la zone (6, 6') de début de l'étranglement et la zone (4) d'arrivée du courant de gaz, jusqu'à la partie (19) la plus éloignée, perpendiculairement à l'axe de basculement (8), d'une transition entre la fin de la zone (6, 6') de début de l'étranglement et la zone (7) de sortie du courant de gaz et est orientée dans le sens de la longueur de l'axe de basculement (8) du papillon de régulation des gaz (9) et que le papillon de régulation des gaz (9) est, dans sa position fermée, appliqué par sa bordure radialement périmétrique sur une zone d'appui dans la zone (6, 6') de début de l'étranglement, la bavure de séparation (20) du noyau se trouvant à l'extérieur de la zone d'appui du papillon de régulation des gaz (9).

2. Tubulure à papillon de régulation des gaz selon la revendication 1, **caractérisée par le fait que** le papillon de régulation des gaz (9) est appliqué, dans sa position fermée, par sa bordure radialement périphérique, dans la zone (6, 6') de début de l'étranglement, sur la paroi intérieure de l'ouverture d'écoulement des gaz (2) à une certaine distance de la transition entre la fin de la zone (6, 6') de début de l'étranglement et la zone (4) d'arrivée des gaz et à une certaine distance entre la fin de la zone (6, 6') de début de l'étranglement et la zone (7) de sortie des gaz.

3. Tubulure à papillon de régulation des gaz selon la revendication 1, **caractérisée par le fait que** le noyau (14) est enrobé par injection de métal léger, notamment d'aluminium.

4. Tubulure à papillon de régulation des gaz selon la revendication 1, **caractérisée par le fait que** le noyau (14) est enrobé par injection de matière plastique.

5. Tubulure à papillon de régulation des gaz selon la revendication 4, **caractérisée par le fait que** le noyau (14) est enrobé par injection de matière thermoplastique ou d'une matière thermodurcissable.
